# EUROPÄISCHE PATENTANMELDUNG

(11) **EP 0 910 000 A1**
(43) Veröffentlichungstag der Anmeldung: **21.04.1999**
(21) Anmeldenummer: 98117423.8
(22) Anmeldetag: 15.09.1998
(51) Int. Cl.: G05B 19/418

(54) **Buchfertigungssystem**

(30) Priorität: 17.09.1997 DE 19740974
(71) Anmelder: Wohlenberg Buchbindesysteme GmbH, 27283 Verden (DE)
(72) Erfinder: Brörken, Jutta R., Dipl.-Ing., 30165 Hannover (DE); Lange, Andreas, Dipl.-Ing., 31515 Wunstorf (DE); Mazikowski, Ralf, Dipl.-Ing., 30169 Hannover (DE); Puchelski, Holger, Dipl.-Ing., 30419 Hannover (DE); Machens-Killig, Martin, Dipl.-Ing., 30900 Wedemark (DE)
(74) Vertreter: Patentanwälte Thömen & Körner

(57) **Zusammenfassung**

Das Buchfertigungssystem umfaßt eine Buchfertigungsstraße mit mehreren Fertigungsmaschinen, Sensoren zur Überwachung und Aktoren zur Einstellung von Maschinenparametern, Anzeigevorrichtungen, Eingabevorrichtungen sowie Rechner, mittels der programmgesteuert Auftragsdaten verarbeitet, Einrichtungsmaßnahmen durchgeführt und Maschinenprozesse überwacht werden. Die Rechner umfassen einen Leitrechner, der über ein Datenbus-System einerseits mit speicherprogammierbaren Steuerungen SPS, an die die Aktoren und Sensoren angeschlossen sind, und andererseits mit Arbeitsstationen verbunden ist. In Speichern, auf die der Leitrechner Zugriff hat, sind sowohl Datenbanken mit Produktdaten, Berechnungsvariablen, Maschineneinstellgrößen, Auftragsdaten, Kundendaten und Materialstammdaten, als auch Programme zur Anlagenkonfiguration, Stammdatenverwaltung, Auftragsbearbeitung, Prozeßkonfiguration, Einrichten, Anlagenüberwachung und Auftragsüberwachung gespeichert.

## Beschreibung

Die Erfindung betrifft ein Buchfertigungssystem nach dem Oberbegriff des Anspruchs 1.

Im Bereich der Druckweiterverarbeitung ist die EDV-Durchdringung bis heute noch sehr gering. Eine Rechnerunterstützung erfolgt bisher nur auf Maschinensteuerungsebene sowie teilweise in den indirekten Bereichen wie Arbeitsvorbereitung, Rechnungswesen oder Produktionsplanung. Hierbei handelt es sich jedoch in der Regel um Insellösungen, die durch keinerlei Schnittstellen miteinander kommunizieren können.

So ist für die Maschinensteuerungsebene aus Reinmar Dammköhler, "Einstell- und Maschinendatensysteme an BuchfertigungsStraßen" in Technik + Forschung, Wiesbaden IV/1989 eine Buchfertigungsstraße mit mehreren Fertigungsmaschinen bekannt, bei der Sensoren zur Überwachung und Aktoren zur Einstellung von Maschinenparametern verwendet werden und ein Rechner die Eingabe, Speicherung und Anzeige von Maschinenparametern sowie die Steuerung und gegebenenfalls Regelung der Buchfertigungsstraße übernimmt.

Der Erfindung liegt die Aufgabe zugrunde, ein Buchfertigungssystem zu schaffen, das eine Koordinierung und Vernetzung weiterer Einflußgrößen der Buchfertigung und damit eine Optimierung des Fertigungsprozesses ermöglicht.

Diese Aufgabe wird bei einem Buchfertigungssystem nach dem Oberbegriff des Anspruchs 1 durch die im kennzeichnenden Teil angegebenen Merkmale gelöst.

Weiterbildungen und vorteilhafte Ausgestaltungen ergeben sich aus den Unteransprüchen.

Durch die erfindungsgemäße Lösung gelingt die Integration weiterer am Buchfertigungsprozeß beteiligter Arbeitsgänge in ein Gesamtsystem. Die für die einzelnen Arbeitsgänge benötigten Daten stehen prozeßdurchgängig zur Verfügung und sind jederzeit von den einzelnen Arbeitsprozessen aus den Datenbanken abrufbar. Als Daten lassen sich auch Erfahrungswerte speichern, aktualisieren und verwenden sowie mit anderen Angaben verknüpfen, so daß auf Expertenwissen zugegriffen werden kann. Hier seien Einflußgrößen wie Raumtemperatur, Luftfeuchtigkeit, Papierart, Leimart und Bindung zu nennen. Dadurch können Rüst- und Einfahrvorgänge beschleunigt und die Prozeßsicherheit erhöht werden. Neben der Reduzierung des Planungsaufwandes wird damit eine Erhöhung der Produktivität und der störungsfreien Betriebsdauer erreicht. Ferner reduzieren sich die Anforderungen an das Fachwissen des Bedienungspersonals, so daß auch angelernte Kräfte eingesetzt werden können.

Durch die Übergabe von Parametersätzen an die speicherprogrammierbaren Steuerungen SPS wird eine standardisierte Schnittstelle zu den einzelnen Maschinen geschaffen, die die maschinennahe Steuerung der SPS überläßt und so den Programmieraufwand der externen Rechner und den Datenfluß in Grenzen hält.

Durch den Benutzerdialog mit dem Bediener wird die Einrichtung der Maschinen wesentlich vereinfacht, beschleunigt und sicherer gemacht. So lassen sich Parameter und deren Grenzen vorschlagen. Diese können vom Bediener übernommen oder geändert werden. Bei nicht automatisch vornehmbaren Einstellungen können die vom Bediener vorgenommenen Maßnahmen quittiert werden. Änderungen, die zu Einrichtefehlern führen, können Fehlermeldungen veranlassen oder den Betrieb zur Vermeidung von Schäden stoppen. Es können auch Einrichtehilfen angeboten werden. Bei der Parametrierung können auch Fehler automatisch auf einen Standardwert oder einen berechneten Wert korrigiert werden.

Die als Vorlagen dienenden Parametersätze können auf einer Initialprogrammierung beruhen oder einmal gelaufene Aufträge sein, die der Bediener selbst zur Vorlage erklärt hat. Die Parametrierung beginnt dann mit einem Parametersatz, der entweder aus dem Vorlagenreservoir kam oder mit Hilfe der Ähnlichteilsuche von einem alten Auftrag kopiert worden ist. Dieser Parametersatz muß im Normalfall an den neuen Auftrag angepaßt werden. Bei Veränderungen in diesem Datensatz greifen Deaktivator, Controler und Parametersatzsynchronisierer ein. Diese Veränderungen können andere Roh- und Fertigformate sein, es können aber auch Produktkomponenten, wie Vorsatz, Gaze, Umschlag beliebig hinzugefügt, entfernt oder verändert werden.

Parameter, die sich nicht unmittelbar aus anderen Parametern oder Randbedingungen errechnen lassen oder die nichtlineare Eigenschaften aufweisen, werden mit empirisch ermittelten Korrekturwerten oder Erfahrungswerten korrigiert.

Die Erfahrungs- und/oder Korrekturparameter werden aus den Fertigungsparametersätzen und den Ist-Maßen bereits gefertigter Produkte und Produktklassen berechnet und/oder aktualisiert.

Es lassen sich dann auch Einflüsse berücksichtigen, die durch nicht genau vorhersehbare Maschineneinflüsse entstehen. Dabei lassen sich auch nichtlineare Abhängigkeiten nachbilden. Da das System hierbei lernt, werden Abweichungen mit der Zeit ständig verringert, aber auch Einflüsse, wie sie beim Austausch von Maschinen oder deren Teilen auftreten könnten, automatisch korrigiert.

Zusätzlich können für Parametrisiermaßnahmen die gespeicherten Daten eines ähnlichen Referenzproduktes aufrufbar sein, bei denen dann nur die abweichenden Parameter zu ändern sind.

Zur Reduzierung einer zeitaufwendigen Parameterbestimmung bei Neuaufträgen wird auf die Informationen von bereits gefertigten Produkten zurückgegriffen. Dies betrifft die Ermittlung der Prozeßparameter, die auf den Erfahrungen der Maschinenbediener/Buchbinder basieren. Dazu werden die während eines Herstellprozesses ermittelten Prozeßparameter ausgewertet und auftragsspezifisch gespeichert. Aus den gegenseitigen Abhängigkeiten der Prozeßparameter und den Produktkomponenten wird durch die Bestimmung von Ähnlichkeiten ein Soll-Parametersatz für einen neuen Auftrag ermittelt. Die Ähnlichkeitsbestimmung bezieht sich dabei auf die Produktkomponenten, deren Merkmale, externe Einflußgrößen, wie Temperatur, Luftfeuchtigkeit sowie die Verfahrensschritte. Durch diese Ausführung lassen sich größtenteils optimierte Erfahrungswerte nutzen, die Anzahl der Einstellvorgänge und damit die Einrichtungszeit verringern und Fehlerquellen reduzieren.

Bei der Vernetzung der Komponenten kann eine Leitebene gebildet sein, in der die Arbeitsstationen mit dem Leitrechner vernetzt sind, und eine Prozeßebene gebildet sein, in der die speicherprogammierbaren Steuerungen SPS mit dem Leitrechner vernetzt sind. Dabei ist das Netz der Leitebene vom Netz der Prozeßebene durch den Leitrechner getrennt.

Verzugsweise ist das Netz der Leitebene ein Lokal Area Netzwerk und das Netz der Prozeßebene ein Feldbussystem.

Durch die Aufteilung in unterschiedliche Netze oder Datenbussysteme läßt sich eine bessere Anpassung an die von den jeweiligen Komponeneten benötigten Eigenschaften, wie Übertragungsgeschwindigkeit und Störsicherheit bei der Datenübertragung herstellen. So erfordert die Kommunikation zwischen den speicherprogammierbaren Steuerungen SPS und dem Leitrechner sofortige Reaktionen, während bei der Kommunikation zwischen den Arbeitsstationen und dem Leitrechner geringere Anforderungen an die Laufzeit gestellt werden.

Gemäß einer Weiterbildung können von den speicherprogammierbaren Steuerungen SPS Betriebsparameter an den Leitrechner rückübertragen werden.

Neben Überwachungsfunktionen lassen sich auch so Parametersätze neuer bearbeiteter Produkte automatisch speichern, daraus künftig verwendbare Parametersätze bilden und Erfahrungsund Korrekturwerte generieren.

Im Programm existiert eine Objektstruktur, in der basierend auf den Informationen der Datenbank oder Datenbanken sämtliche Informationen über die in der Anlage befindlichen Maschinen, deren Baugruppen und deren Parameter abgelegt sind. Parameter in diesem Sinne können eine oder mehrere der folgenden Eigenschaften besitzen:
a) numerische Fließkommawerte, wie 2,34 oder diskrete Werte, die einzeln bestimmt worden sind, wie z. B. ja oder nein, Station an: = 1 oder aus: = 0,
b) online-Werte, nämlich Variablen, die automatisch Einstellungen durch die SPS veranlassen können, und automatisch lesbare Ist-Werte, die von der SPS zurückgeschrieben werden können, oder offline-Werte, die einen Bedienereingriff erfordern und nicht automatisch zurückgeschrieben werden können,
c) Vorgabewert ja, wie Leimfilmdicke oder Vorgabewert nein, wie reale Maschineneinstellwerte, z. B. Leimwalzeneinstellung, die sich aus einem Vorgabewert ergeben kann, oder virtuelle Variablen, z. B. Frästiefenₙ,
d) berechenbar, wie Blockaushang = Einlauftischhöhe - Summe über n Frästiefenₙ, zurückrechenbar, nämlich die Umkehrung der vorstehenden Beziehung oder nicht berechenbar,
e) Formeln, wie die vorerwähnte, die Bezuge zu anderen Parametern haben,
f) Sollwerte für Maschineneinstellungen, die z. B. zur Durchführung eines Auftrages eingestellt werden müssen, und Ist-werte, die die aktuelle Einstellung wiedergeben,
g) Minimum- und Maximumwerte, welche zur Prüfung von Sollwerten herangezogen werden,
h) Toleranzen, die angeben, wie weit Soll- und Istwerte abweichen dürfen,
i) Einrichtebedarf, der gegeben ist, wenn Soll- und Istwerte zu weit abweichen,
j) anzeigbar oder nicht anzeigbar auf einer Anzeigevorrichtung des Servers, Clients oder der SPS,
k) Faktor, um Werte in SI-Einheiten anzeigen zu können,
l) Einheit, die den Werten zugeordnet werden,
m) vorhanden oder nichtvorhanden bei Maschinenteilen bzw. aktiviert oder nicht aktiviert bei Funktionen sowie
n) Namen von z. B. Maschinen, Funktionen oder diskreten Größen.

Die Datenbank oder die Datenbanken können Produktdaten und/oder Berechnungsvariablen und/oder Maschineneinstellgrößen und/oder Auftragsdaten und/oder Kundendaten und/oder Materialstammdaten umfassen.

Mit diesen Daten ist bereits eine umfassende prozeßdurchgängige Unterstützung bei der Anlagenkonfiguration, der Auftragsplanung, der Prozeßplanung, dem Einrichten und dem Online-Überwachen gegeben.

Zusätzlich kann die Datenbank oder können die Datenbanken Stördaten und/oder Wartungs- und Instandhaltungskennwerten und/oder Qualitätsdaten und/oder Funktionsabläufen und - verknüpfungen für unterschiedliche Produktionsvarianten speichern.

Hierdurch stehen die Daten für eine optimierte Belegungsplanung für die komplette Fertigungslinie durch permanente automatische Zustandserfassung zur Verfügung. Dies beinhaltet auch eine prozeßbegleitende Stördatenerfassung und -analyse, die als Informationsbasis für nutzungssteigernde Maßnahmen dient. Auf diese Weise können die Betriebszustände aller Anlagenkomponenten unter Beachtung der logistischen Verknüpfung und mit hoher Erfassungstiefe aufgenommen werden.

Zweckmäßig umfaßt das Programm oder die Programme mehrere Programm-Module. Zwischen diesen Programm-Modulen kann ein Daten- und Parameteraustausch unmittelbar und/oder über einen gemeinsamen Programmkern und/oder über die Datenbank erfolgen.

Durch die Modularisierung innerhalb des Programms können verschiedene Ausbaustufen bezüglich des verfügbaren Funktionsumfanges über Softwareeingriffe realisiert bzw. dargestellt werden. Außerdem können mehrere eigenständige Applikationen erstellt werden, die untereinander kommunizieren und z. B. über Auswertung eines Datenaustausches ein bestimmtes Fenster aufrufen und auch wieder den richtigen Rücksprung finden. Der Applikationswechsel und/oder Funktionsbereichswechsel wird dann dem Bediener nicht deutlich. Ein Vorteil dieser Ausführung ist, das gesperrte Funktionsbuttons vermieden und die Einzelfunktionalität vereinfacht wird.

Außerdem kann der Bediener entsprechend seinem Namen zu einer Nutzergruppe zugeordnet werden. Eine persönliche Konfigurationsdatei kann geladen werden. Liegt keine eigene vor, wird die Default-Einstellung gewählt. Entsprechend der vorher definierten Zugangsberechtigungen, können die entsprechenden Funktionen gesperrt werden.

Zweckmäßig sind Programm-Module zur Anlagenkonfiguration und/oder Stammdatenverwaltung und/oder Auftragsbearbeitung und/oder Prozeßkonfiguration und/oder Einrichten und/oder Anlagenüberwachung und/oder Auftragsüberwachung vorgesehen.

Diese Programm-Module gestatten eine prozeßdurchgängige Rechnerunterstützung aller wesentlichen Arbeitsschritte bei der Planung und Durchführung von Buchbindeaufträgen. Dabei können von einzelnen Programm-Modulen bereits vorverarbeitete Datensätze übernommen und weiterverarbeitet werden.

Die Programm-Module zum Einrichten können einen Aktivator/Deaktivator, einen Controler und einen Parametersatzsynchronisierer umfassen.

Mit diesen Programm-Modulen zur Einrichteunterstützung gelingt eine Parametersatzüberprüfung, die aufgrund der Parameterstruktur aus berechenbaren Maschineneinstellwerten und zurückrechenbaren Hilfsvariablen erkennt, ob der Parametersatz für die Maschine kollisionsfrei ist.

Da nicht jeder Zustand durch eine Formel beschrieben werden kann, gibt es für diese Parameter zusätzlich aktive und deaktive Werte. Aktive Werte sind z.B. Standardleimfilmdicken, ihre entsprechenden deaktiven Werte sind 0 und gehen auch so in die Formeln der anderen Parameter ein, wie z.B. Pressen. Bei Leimfilmdicke = 0 mm würden die Formelwerte die Leimwalzen bis an den Block fahren lassen. Um das zu vermeiden gibt es auch für die Leimwalzen deaktive Werte, die den abgesenkten Zustand des Leimwerkes beschreiben. Beim Berechnen dürfen diese Werte auf keinen Fall durch die Formelwerte ersetzt werden. Die Formeln werden nur für aktive, be- oder zurückrechenbare Parameter benutzt. Für alle berechenbaren Parameter wird als aktiver Wert die Formel ausgeführt. Alle nicht berechenbaren Werte bekommen den geparsten aktiven Wert aus einer Tabelle zugewiesen.

Die Funktion Controler erleichtert dem Bediener das Einrichten/Umrüsten dadurch, daß es Abhängigkeiten, die fest definiert sind, überprüft und gegebenenfalls selbständig korrigiert. Die Funktion wird jedesmal aktiviert, wenn der Bediener einem Parameter, der in der Controlertabelle eingetragen ist, einen neuen Wert zuweist, z. B. Leimwerk auf Hotmelt, worauf die zugehörige Temperatur und Leimfilmdicke auf sinnvolle Werte eingestellt werden.

Nach Veränderungen in einem Parametersatz durch den Bediener können Dateninkonsistenzen vorhanden sein. Da be- und zurückrechenbare Parameter durch ihre Formel in Abhängigkeit zu anderen Parametern stehen, müssen diese neu be- oder zurückgerechnet werden um wieder einen synchronen Datensatz zu erhalten.

Der beim Parametrisieren verwendete Sychronisierer kann die neu errechneten Werte auf ihren Gültigkeitsbereich überprüfen. Hier ergibt sich eine Kollisionsüberprüfung, die für alle be- und zurückrechenbaren Parameter eine Fehlerhilfe ausgeben kann. Die deaktivierten Parameter behalten ihren deaktiven Wert. So kann auch eine automatische Parameterkorrektur ablaufen, wenn der Bediener trotz Fehlerhilfe nicht in der Lage ist, einen kollisionsfreien Parametersatz einzustellen.

Alternativ oder ergänzend können zusätzlich Funktionen zur Ähnlichkeitssuche und/oder Qualitätsdatenerfassung und - auswertung und/oder Diagnose und/oder Wartung vorgesehen sein.

Das Buchfertigungssystem bildet damit eine planerischorganisatorische Ebene über den Prozeßsteuerungen der einzelnen Maschinenteile. Beliebige zusätzliche Module der Produktfamilie können zu einer integrierten Buchfertigungsanlage konfiguriert und aufeinander abgestimmt werden.

Vorzugsweise umfassen die Programme visuelle Benutzerschnittstellen, durch die in mehreren Bildschirmbereichen gleichzeitig eine Darstellung der gesamten Anlage, eine schematische Darstellung einzelner Maschinenteile, kontextsensitiv dazu eine Parameterdarstellung der ausgewählten Maschinenteile und eine Statusanzeige der gesamten Anlage oder einzelner Maschinenteile erfolgt.

Dadurch hat der Bediener alle nötigen Informationen für Planungs-, Einrichte- und Überwachungsaufgaben gleichzeitig im Blickfeld. Dieser ergonomische Aufbau der visuellen Benutzerschnittstelle erleichtert eine ermüdungsfreie schnelle und fehlerfreie Eingabe und Bedienung und sichert damit eine hohe Produktoualität.

Die visuelle Benutzerschnittstelle ermöglicht den Zugriff auf mehrere gleichzeitig ablaufende Programm-Module und einen Wechsel von einer zur anderen Bildschirmdarstellung direkt, d. h. auch ohne Durchlaufen der Menü-Baumstrukturen der Programm-Module umfassen.

Dadurch ist ein schnelles Umschalten in andere Funktionsmodule möglich. Der Bediener kann also z. B. direkt aus einer der Masken des Planungsmoduls in einen anderen Bereich gelangen, ohne daß dazu der Pfad zur Planungshauptmaske zurückverfolgt werden muß. Zielpunkt ist die zuletzt aktive Maske des gewählten Bereiches.

Nachfolgend wird die Erfindung anhand von Ausführungsbeispielen beschrieben, die in der Zeichnung dargestellt sind. In der Zeichnung zeigen:
- Fig. 1: eine grafische Darstellung eines Modulkonzeptes des Buchfertigungssystems,
- Fig. 2: eine grafische Darstellung der Topologie der Anlagenvernetzung,
- Fig. 3: eine grafische Darstellung eines Flußdiagramms vom Ablauf der Planung bis zur Fertigung,
- Fig. 4: Bildschirmdarstellungen der Parametermaske des Prozeßplanungsmoduls und
- Fig. 5a - 5c: Bildschirmdarstellungen der Parametermaske des Einrichtungsmoduls.

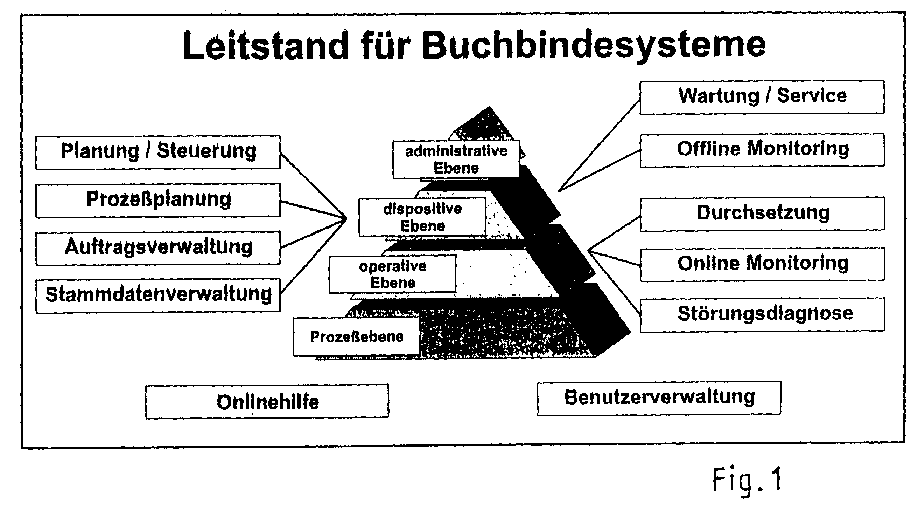

Fig. 1 zeigt eine grafische Darstellung eines Modulkonzeptes des Buchfertigungssystems. Ähnlich der hierarchischen Struktur eines Fertigungsbetriebes sind hier vier Ebenen vorhanden, nämlich die administrative Ebene, die dispositive Ebene, die operative Ebene und die Prozeßebene. In der dispositiven Ebene und der operativen Ebene greifen die Programm-Module an. So sind in der dispositiven Ebene die Module Planung und Steuerung, Prozeßplanung, Auftragsverwaltung, Stammdatenverwaltung, Wartung und Service sowie Offline Monitoring enthalten. In der operativen Ebene handelt es sich um die Module Durchsetzung, das auch eine Einrichtungsunterstützung umfaßt, Online Monitoring und Störungsdiagnose. Daneben sind noch die Programm-Module Onlinehilfe und Benutzerverwaltung vorhanden, die nicht ausschließlich einer Ebene zuzuordnen sind, sondern in allen Ebenen zur Verfügung stehen.

Das Programm-Modul "Plannung und Steuerung" umfaßt Verfahren zur simultanen Ressourcenplanung der Maschine und Funktionen zur Anwendung von Algorithmen zur Maschinenbelegung nach definierbaren Zielkriterien, wie minimale Rüstzeit, maximalen Durchsatz und Termineinhaltung, sowie Funktionen zur Auftragsfreigabe, Auftragsverfolgung, Auftragsfortschrittskontrolle, Losgröße und Mengenabweichung. Ergänzend können auch Verfahren zur Termin- und Kapazitätsplanung einbezogen werden.

Das Programm-Modul "Prozeßplanung" umfaßt Funktionen zur Produktstrukturierung, eine Bedienerunterstützung bei der Auslegung von Prozeßparametern mit Funktionen zur Modellierung der Prozeßschritte zur Buchherstellung, zur Ermittlung der Prozeßeigenschaften, wie Zustandsfunktionen, die den Prozeß beschreiben, Zustandsvariablen, Prozeßparameter, Steuergrößen, Zustandsvariablen, Prozeßparameter, Steuergrößen, Ermittlung und Definition von Konfigurationskenngrößen zur Prozeßauslegung, wie Papierart, Format, Bindung, Leimart, Umschlag, Einzelbogen, gefalzter Bogen, Einzel/Doppel/Mehrfachnutzen, Taktzahl und Temperaturen. Weiterhin gehören zum Programm-Modul "Prozeßplanung" eine prozeßbegleitende Wissensakquisition und -verarbeitung und eine Analyse und Auswertung der Prozeßinformationen.

Damit ist die Möglichkeit gegeben, den Rüst- und Bearbeitungsprozeß weitestgehend vorzukonfigurieren. Bei der Anlagenkonfiguration können aus einem Maschinenpool die für einen Auftrag benötigten Maschinen zu einer Anlage zusammengestellt werden. Es können auch Rüstkomponenten mit ihren technologischen Merkmalen und Einstellgrößen auftragsspezifisch konfiguriert werden. Außerdem existieren Funktionen zur Teillosund Teilmengenbildung und Funktionen zur auftragsspezifischen Ansteuerung der Zusammentragstationen zum selektiven Binden. Dabei wird dann eine Entkopplung der einzelnen Maschinen der Anlage durch dynamische Puffer in der Steuerung berücksichtigt. Außerdem besteht die Möglichkeit, verschiedene Aufträge parallel auf der Anlage laufen zu lassen, sobald ein kollisionsfreier Betrieb durchführbar ist.

Ferner umfaßt das Programm-Modul "Prozeßplanung" eine Ähnlichkeitssuche mit Ähnlichkeitskriterien bei Buchprodukten, anhand derer eine Bestimmung ähnlicher Produkte erfolgen kann, mit Merkmalsklassen der Ähnlichkeiten und einer Zuordnung der Ähnlichkeitskriterien zu den Klassen sowie einer Methode zur Bestimmung von Ähnlichkeiten in der Produktstruktur sowie im Verfahrensablauf. Dabei wird eine anwenderspezifische Priorisierung der Ähnlichkeitsklassen berücksichtigt, wie die primäre Einteilung und Suche nach Buchformaten, Bindearten oder Klebstoffarten.

Das Programm-Modul "Auftragsverwaltung" umfaßt Funktionen zur Auftragsverwaltung, wie Anzeigen, Suchen, Ändern, Einfügen, Löschen, Duplizieren von Aufträgen und Losen.

Das Programm-Modul "Stammdatenverwaltung" umfaßt Funktionen zur Eingabe, Anzeige, Ändern, Löschen, Duplizieren von Stammdaten, zum Erstellung und Verwaltung von Schichtmodellen und -zeiten, zur Anzeige der Schichtmodelle, wie Arbeitstagemodell, Arbeitszeitmodell, zur Anzeige der Schichtzeiten eines Modells, zur Erstellung und Verwaltung eines Betriebskalenders sowie Kundenstammdaten und Anlagendaten.

Das Programm-Modul ''Wartung und Service'' umfaßt Funktionen zur Veranlassung, Unterstützung und Durchführung von Wartungs- und Instandhaltungsmaßnahmen nach zeitlichen belastungsabhängigen und ereignisabhängigen Vorgaben. Bei der Bearbeitung der anfallenden Aufgaben wird der Bediener durch Bilder und Texte interaktiv unterstützt. Auch kann ein Ersatzteilkatalog eingebunden werden. Außerdem kann durch Datenfernübertragung auch eine Meldung an eine Serviceleitstelle des Herstellers erfolgen und von dort eine Fernwartung und Fernprogrammierung durchgeführt werden.

Das Programm-Modul "Offline Monitoring" umfaßt Funktionen zur Erstellung eines Fortschrittdiagramms, das für jede Maschine gepflegt wird und tageweise einen Report erstellt, der alle relevanten Systemkenngrößen wie Nutzungsdauer und Fertigungsdauer enthält. Die Funktionen dienen ferner zur Bestimmung von Produktivitätskennwerten, zur Datenanalyse und langfristigen, mittelfristigen und kurzfristig Datenauswertung sowie zur Darstellung der Kennzahlen als Listen, Diagramme, oder Grafiken.

Auf Basis des Ereignisprotokolls kann nach dem Setzen eines Zeitfensters eine Analyse durchgeführt werden, die die aufgetretenen Störungen nach Häufigkeit, alternativ nach Dauer, klassifiziert darstellt. Eine Analyse der Reportliste ermöglicht die Berechnung von Kennziffern, wie z.B. dem Nutzungsgrad und der technische Verfügbarkeit. Diese Kennziffern können graphisch aufbereitet werden und stellen so ein hilfreiches Diagnosewerkzeug dar. Weiterhin wird auch eine Qualitätsdatenerfassung und -auswertung während der Prozeßlaufzeit anhand von definierten Qualitätskennwerten der Endprodukte und der Zwischenstufen des Produktes beim Herstellungsprozeß ermöglicht. Dabei sind die Qualitätsdaten in Kategorien eingeteilt.

Das Programm-Modul "Durchsetzung" umfaßt Funktionen zur Durchsetzung von Aufträgen und zur Auftragsüberwachung, wie Leistungsabweichung sowie Ermittlung von Gut- und Ausschußstückzahlen. Hierfür steht für die zu bearbeitenden Aufträge eine interaktive Einrichthilfe für sämtliche Maschinenmodule zur Verfügung. Die Einzelkomponenten können dann in einem weiteren Schritt entsprechend ihrer Ausstattung konfiguriert werden. Dabei ist es möglich, sowohl rücklesbare als auch nicht rücklesbare Maschineneinstellungen zu verwalten. Je nach gewünschtem Detailierungsgrad wird dem Bediener Handlungsbedarf bis hin zum Einzelparameter angezeigt.

Über entsprechende Methoden können Baugruppen ein- bzw. ausgeschaltet werden, wobei automatisch die zugehörigen Maschineneinstellwerte auf Standardein- bzw. -auswerte gesetzt werden, und bei Deaktivierung ein weiteres Editieren dieses Wertes verriegelt wird. Zusätzlich besteht die Möglichkeit während des Rüstens ausgehend von Vorgabewerten wie z.B. Produktmaßen, die Maschineneinstellwerte zu berechnen. Der Einrichtebedarf wird dem Bediener interaktiv bis hin zum Einzelparameter angezeigt und hilft so Fehler zu vermeiden. Zur Unterstützung des Rüstvorganges steht, wie im gesamten Programm, eine Online-Bedienerunterstützung zur Verfügung.

Dazu erfolgt eine Unterstützung sowohl automatischer als auch manueller Einstellungen durch Plausibilisierung der gewünschten Parameter durch eine Kollisonsbetrachtung, bei der versucht wird, die Maschineneinstellungen auf Vorgabewerte zurückzurechnen. Ferner werden Empfehlungen einer bestimmten Reihenfolge beim Einrichten gegeben und die eingerichteten Werte auftragsbezogene an die Datenbank rückgemeldet.

Das Programm-Modul "Online Monitoring" umfaßt Funktionen zur Erfassung von Stations- und Anlagenkennwerten zur Zustandsbewertung, wie Nutzungsdauer, Betriebsdauer, Stillstandsdauer, Verfügbarkeitgrad, Nutzungsgrad, Taktzeit, Ausfalldauer und Laufdauer, weiterhin zur langfristigen, mittelfristigen und kurzfristigen Auswertung der Anlagen- und Stationskennwerte, zur Implementierung von Instandhaltungs- und Wartungsstrategien zur Verfügbarkeitssicherung sowie Funktionen zur Wartungsterminplanung, zu Instandhaltungsmaßnahmen, zur Standzeitüberwachung von verschleißenden Maschinenteilen und Werkzeugen und zur Darstellung von grafischen Elementen zur Visualisierung von Instandhaltungsmaßnahmen. Im Rahmen dieser Überwachung werden der Ressourcenverbrauch an Bogen, Klebstoff, Gaze, Umschläge erfaßt, die Klebstoff-Füllhöhe im Leimwerk angezeigt sowie die Inline-Prozeßgrößen, wie Geschwindigkeit, Klammerpreßdruck, Frästiefe und Leimdicke erfaßt und der Materialfluß überwacht.

Schließlich umfaßt das Programm-Modul "Störungsdiagnose" Funktionen zur Erfassung von Zustandsmerkmalen der Anlagenmodule mit Ermittlung von Ursache-Wirkungs-Zusammenhängen. Dazu gehören die Datenerfassung, wie Signalbereitstellung, - erfassung und -weiterleitung, Datenaufbereitungsfunktionen, eine Ablaufstruktur der Diagnose mit einem Fehlersuchlaufplan zur Fehlerlokalisierung, Funktionen zur Darstellung von Störungen, langfristige Fehlerauswertungen zur kontinuierlichen Produktverbesserung, die Ermöglichung der externen Diagnose von Störungen und einer Funktion zur Auswahl von Schaltplänen aus einem Schaltplankatalog.

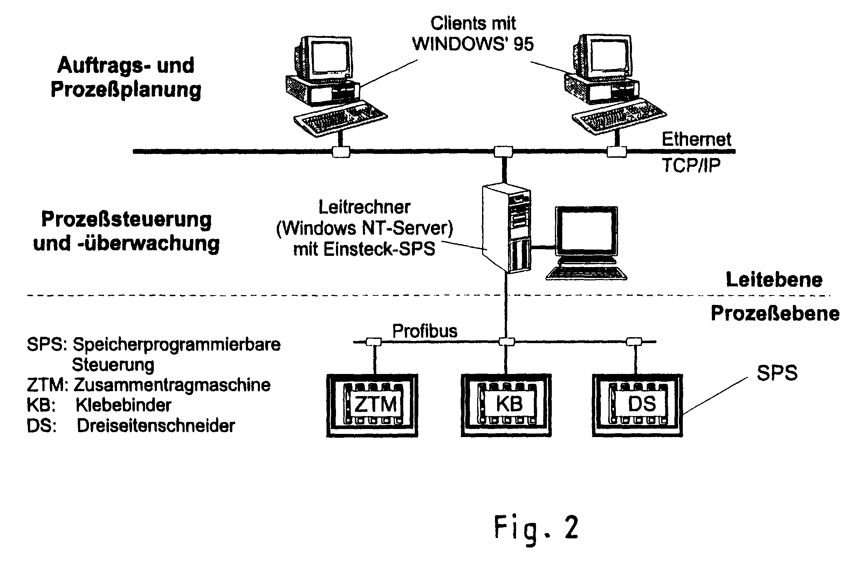

Fig. 2 zeigt eine grafische Darstellung der Topologie der Anlagenvernetzung. Einer hier nicht dargestellten Buchfertigungsstraße mit mehreren Fertigungsmaschinen, wie Zusammentragmaschine, Klebebinder und Dreiseitenschneider sind Sensoren zur Überwachung von Maschinenparametern und Aktoren zur Einstellung von Maschinenparametern zugeordnet. Die Sensoren und Aktoren sind über Datenbusse an speicherprogammierbare Steuerungen (SPS) angeschlossen. Die speicherprogammierbaren Steuerungen (SPS) wiederum sind über einen weiteren Datenbus mit einem maschinennahen Server verbunden. Dieser speichert zentral Datenbanken mit Produktdaten, Berechnungsvariablen, Maschineneinstellgrößen, Auftragsdaten, Kundendaten und Materialstammdaten, als auch ein Programm mit Programm-Modulen zur Anlagenkonfiguration, Stammdatenverwaltung, Auftragsbearbeitung, Prozeßkonfiguration, zum Einrichten, zur Anlagenüberwachung und zur Auftragsüberwachung. Der Server verfügt auch über eine Anzeigevorrichtung und eine Eingabevorrichtung. Vom Server aus lassen sich sämtliche Programm-Module ausführen. Außerdem sind mit dem Server als Clients ausgebildete Arbeitsstationen verbunden, die ebenfalls Anzeigevorrichtungen zur Benutzerführung und Eingabevorrichtungen zur Steuerung und Bestätigung von Einstellungen darstellen. Darüberhinaus können auf diesen Clients auch Teilprogramme gespeichert sein und ablaufen. Auch den speicherprogammierbaren Steuerungen (SPS) können Anzeigevorrichtungen und Eingabevorrichtungen für spezielle Maschinenparameter zugeordnet sein.

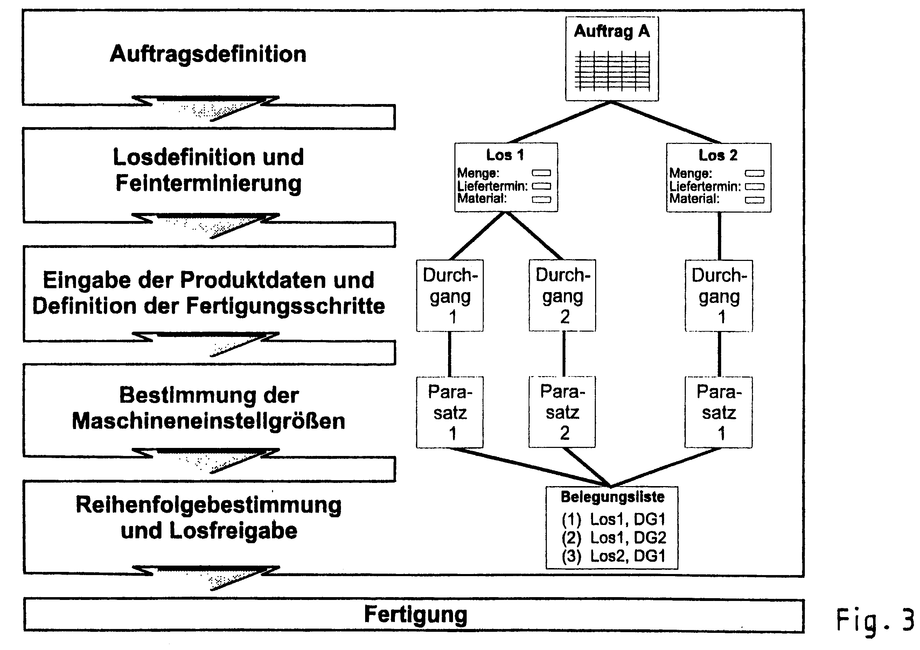

Fig. 3 zeigt eine grafische Darstellung eines Flußdiagramms vom Ablauf der Planung bis zur Fertigung. In einer ersten Planungsstufe werden die Auftragskopfdaten aufgenommen. Dazu zählen alle zur Identifikation des Auftrags wichtigen Informationen wie z. B. die Kundenauftragsnummer, die interne Auftragsnummer, der Buchtitel, die Kundennummer und der Kundenname. Zum Zugriff und zur Verwaltung der Kundendaten steht eine direkte Verknüpfung zu den "Kundenstammdaten" zur Verfügung.

Neben der Definition der Auftragskopfdaten muß die Art des zu fertigenden Produktes spezifiziert werden, um die zur Fertigung benötigten Anlagenkomponenten ermitteln zu können. Zur Auswahl der Produktart steht dem Bediener eine Liste von Referenzprodukten zur Verfügung, die auf der vorhandenen Anlage gefertigt werden können. Ein Referenzprodukt ist durch eine bestimmte Produktart oder Produktstruktur charakterisiert und enthält gleichzeitig alle Fertigungsdaten, wie Maschineneinstellgrößen und Produktparameter eines Auftrags, dessen Produkte mit besonders guter Qualität gefertigt wurden.

Anschließend werden in einer zweiten Planungsstufe vom Planer Fertigungslose definiert. Die Definition mehrerer Lose ist dann sinnvoll, wenn der Kunde Teillieferungen zu unterschiedlichen Terminen fordert. Die Lose werden dann im Rahmen einer Grobterminierung unter Berücksichtigung bereits verplanter Kapazitäten in eine Planperiode von ca. einer Woche zur Fertigung eingeplant.

Ziel der nächsten Planungsstufe, der Parametrierung, ist die Bestimmung von Soll-Vorgaben für die Maschineneinstellgrößen der einzelnen Fertigungsstufen, nämlich der Durchgänge zur Fertigung von Teilprodukten eines Produktes. Die Anzahl und Gestaltung von Fertigungsdurchgängen werden aus den Daten des Referenzproduktes ausgelesen. Es können jedoch auch Durchgänge hinzugefügt oder entfernt werden; im allgemeinen wird ein Durchgang zur Fertigung des Endproduktes jedoch ausreichend sein.

Die Vorgaben des Referenzproduktes in den einzelnen Durchgängen müssen nun vom Bediener im Hinblick auf die auftragsspezifischen Produktdaten, wie Geometrie und Materialien, angepaßt werden. Dabei hat der Bediener auch die Möglichkeit, das Produkt in seiner Grundstruktur zu modifizieren, d. h. Komponenten hinzuzufügen oder zu entfernen. Das Referenzprodukt dient somit als Planungsgrundlage und entspricht nicht zwangsläufig dem vom Kunden geforderten Endprodukt.

Aus den nun im System bekannten Produktdaten werden für jeden Fertigungsdurchgang die Maschineneinstellgrößen in einer vierten Planungsstufe berechnet. Die Berechnung basiert auf Algorithmen, in denen die geometrischen und die qualitätsbezogenen Abhängigkeiten in der Anlage abgebildet werden.

Wurden für alle Durchgänge eines Loses die Maschineneinstellgrößen bestimmt, ist die Produktplanung abgeschlossen und das Los kann an die Fertigung freigegeben werden. Zuvor sollten jedoch alle Lose eines Planungshorizontes einer Reihenfolgeplanung unterzogen werden.

Die Festlegung einer Fertigungsreihenfolge für die Lose in einer fünften Planungsstufe ergibt sich aus der Forderung nach einer möglichst termingerechten und wirtschaftlichen Fertigung der Kundenaufträge. Ordnungskriterien sind zum einen Liefertermine aber auch Produktähnlichkeiten, um Rüstzeiten zu minimieren. Danach erfolgt die Fertigung.

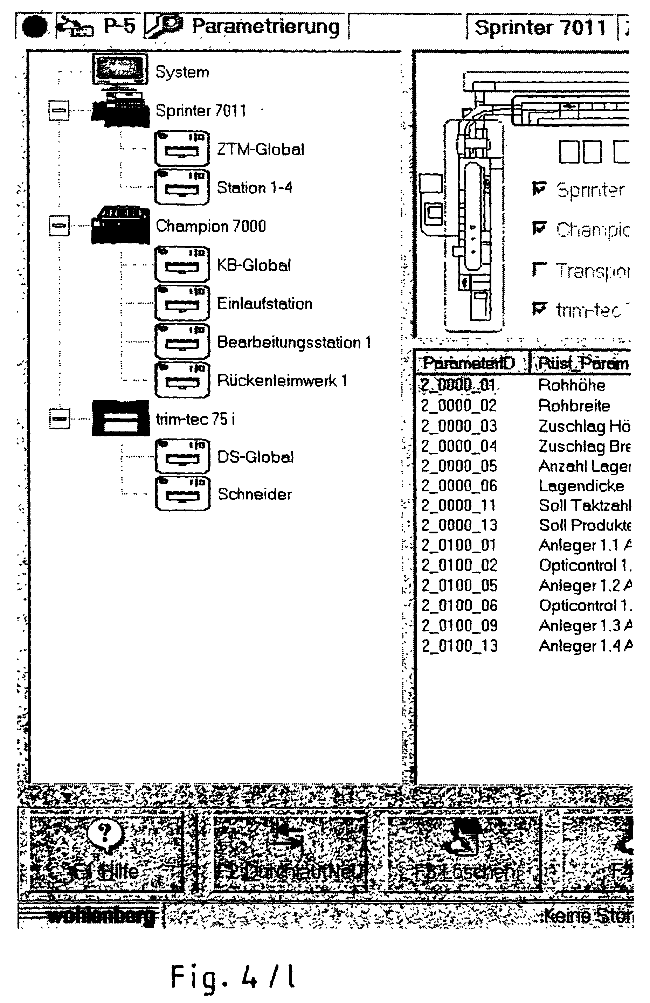

Fig. 4 zeigt eine Bildschirmdarstellung der Maske des Prozeßplanungsmoduls. Die Maske teilt sich in vier Hauptbereiche auf. Zusätzlich ist unten noch eine Steuerleiste mit Steuerknöpfen vorgesehen, deren Aufgabe und Beschriftung teilweise von der gerade aufgerufenen Maske abhängt. In dem Bereich oben rechts werden allgemeine Verwaltungsdaten des aktuellen Auftrags dargestellt. Dazu gehören u. a. Auftragsnummer, Losnummer.

Links neben dem beschriebenen Bereich befindet sich eine Skizze der Anlage und ein Feld mit Checkboxen, in denen die für die Durchführung des zu planenden Auftrags benötigten Anlagenteile markiert und damit ausgewählt werden können. Mit der vorgenommenen Auswahl tritt auch eine optische Hervorhebung durch Farb- und/oder Helligkeitsmarkierung der Anlagenteile ein.

Ganz links oben sind die Anlagenteile in einer Baumstruktur aufgelistet und ebenfalls entsprechend der vorgenommenen Auswahl optisch hervorgehoben.

Im unteren rechten Bereich der Maske befindet sich ein Feld, in dem die Produktparameter für einen Auftrag eingegeben, verändert oder von bereits gespeicherten Aufträgen angezeigt werden können.

Die Prozeßplanungsmaske stellt ein integriertes Produkt- und Prozeßplanungsmodul dar, in dem der Bediener gleichzeitig das Produkt konfiguriert und implizit einen großen Teil der Einstellgrößen vorgibt.

Die Bestimmung der Soll-Einstellgrößen basiert auf den vom Kunden vorgegebenen Produktdaten und Berechnungsvariablen die das fertigungstechnisches Know How erfahrener Buchbinder abbilden.

Die Produktdaten umfassen die Produktstruktur, die geometrischen Abmessungen des Produktes und die zu verwendenden Materialien. Grundsätzlich werden numerische Daten, z. B. Formate, und diskrete Daten, z. B. Leimart, unterschieden.

In die Maske wurde eine Funktion implementiert, nach der auf der Basis grundlegender Informationen, die zum Teil aus Referenzdaten gewonnen werden, die Maschineneinstellgrößen so vorgegeben werden können, daß eine hohe Prozeßsicherheit und damit eine hohe Produktoualität erzielt wird.

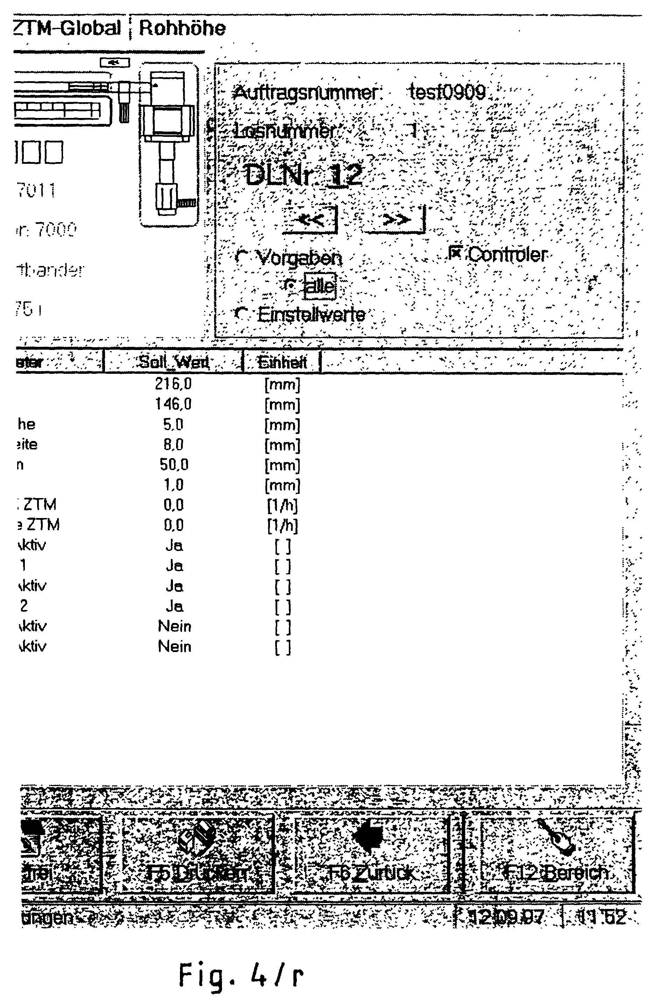

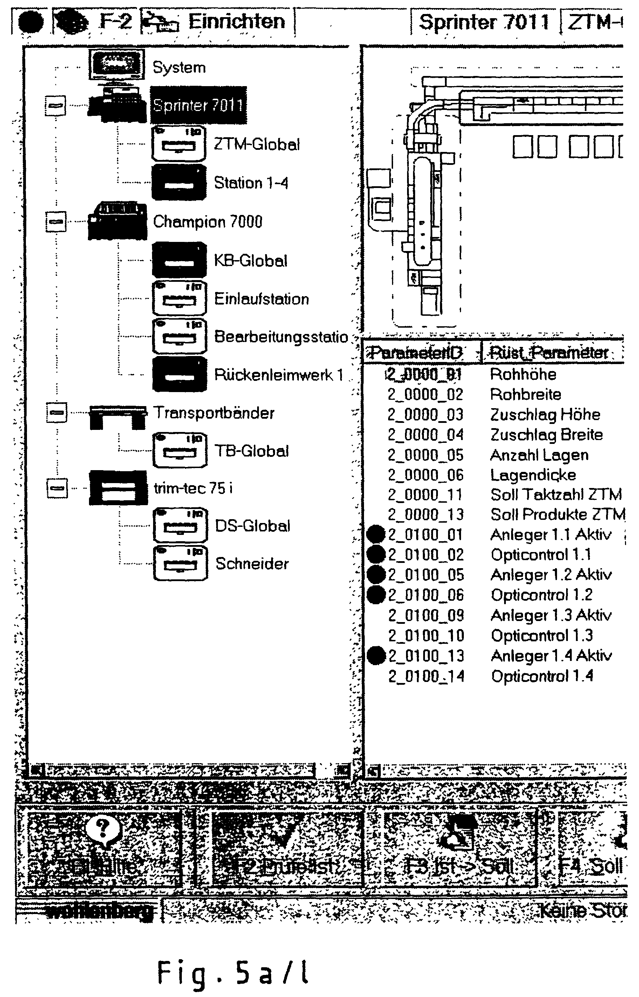

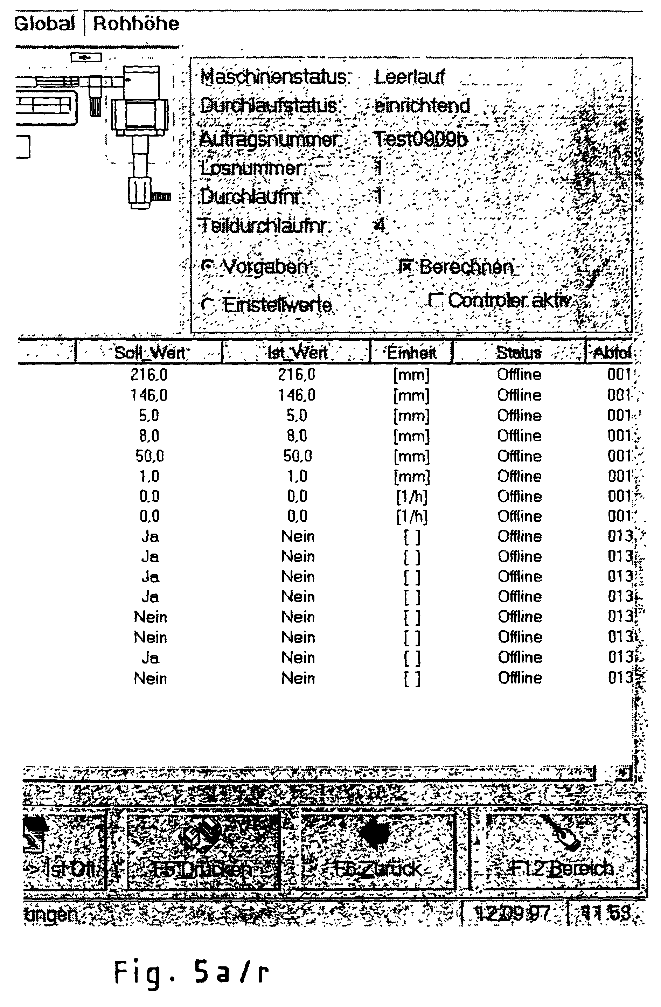

Die in Fig. 5a dargestellte Maske ähnelt der in Fig. 4 gezeigten, es handelt sich aber hier um die Einrichtungsmaske, mit der die Vorgaben und/oder sämtliche an den Maschinen möglichen Einstellwerte aufgelistet werden können, mit denen die Maschinen für die Abarbeitung des mit der Maske des Prozeßplanungsmoduls erstellten Auftrags eingerichtet sind.

Im Bereich oben rechts werden die Auftragsnummer des Auftrages, der aktuell eingerichtet wird, die Losnummer und die zugehörigen Durchgänge der aktuell ausgewählten Maschine angezeigt.

Oben in der Mitte befindet sich eine Skizze der Anlage, bei der die für den beabsichtigten Durchgang belegten Anlagenteile markiert sind.

Links wird die gesamte vorhandene Anlagenkonfiguration visualisiert. Für jede dargestellte Maschine können die zugehörigen Baugruppen angezeigt werden. Steht der Fokus auf "System", werden unten rechts alle das Gesamtsystem betreffenden Daten angezeigt, und zwar in Abhängigkeit der oben rechts gewählten Anzeigeart. Wird der Fokus auf eine Maschine bewegt, wie in Fig. 5a, werden die maschinenrelevanten Daten angezeigt, bei Selektion einer Baugruppe entsprechend die Baugruppendaten.

Im unteren rechten Bereich der Maske befindet sich ein Feld, in dem für die belegten Anlagenteile die Einstellwerte angezeigt werden. Die Art und der Umfang der dargestellten Daten hängt von der im Feld oben rechts gewählten Ansicht "Vorgaben" oder "Einstellwerte" ab. Bei der Option "Vorgaben" werden die grundlegenden, zur Fertigung des Produktes zwingend notwendigen Daten angezeigt. Es handelt sich dabei im wesentlichen um die oben beschriebenen Produktdaten und um einige den Fertigungsprozeß maßgeblich beeinflussende Angaben z.B. besondere Werkzeuge.

Die Anzeige "Einstellwerte" visualisiert alle Daten, die zum Einrichten der Anlage für den betreffenden Durchgang vom Maschinenbediener benötigt werden.

Durch Markierungen neben den Parameterangaben wird zudem angezeigt, ob ausgehend von der bisherigen Einstellung der Anlage ein Einrichtebedarf gegeben ist. Dieser wird über die zugehörige Baugruppe bis hin zur Maschine weitergereicht und im linken Fenster und in der Anlagenskizze über Farbumschläge und/oder Rahmen dargestellt.

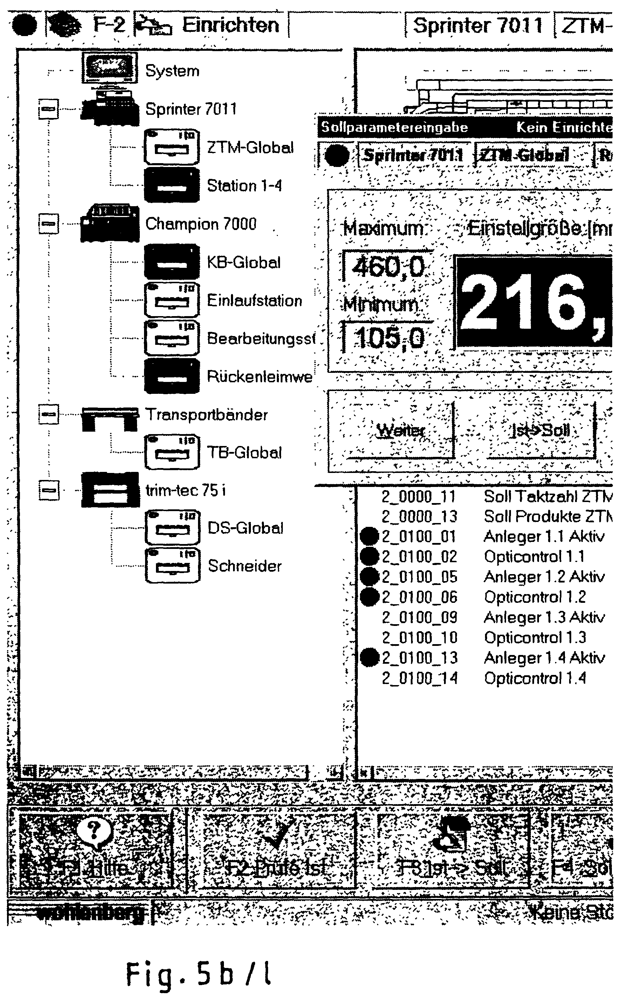

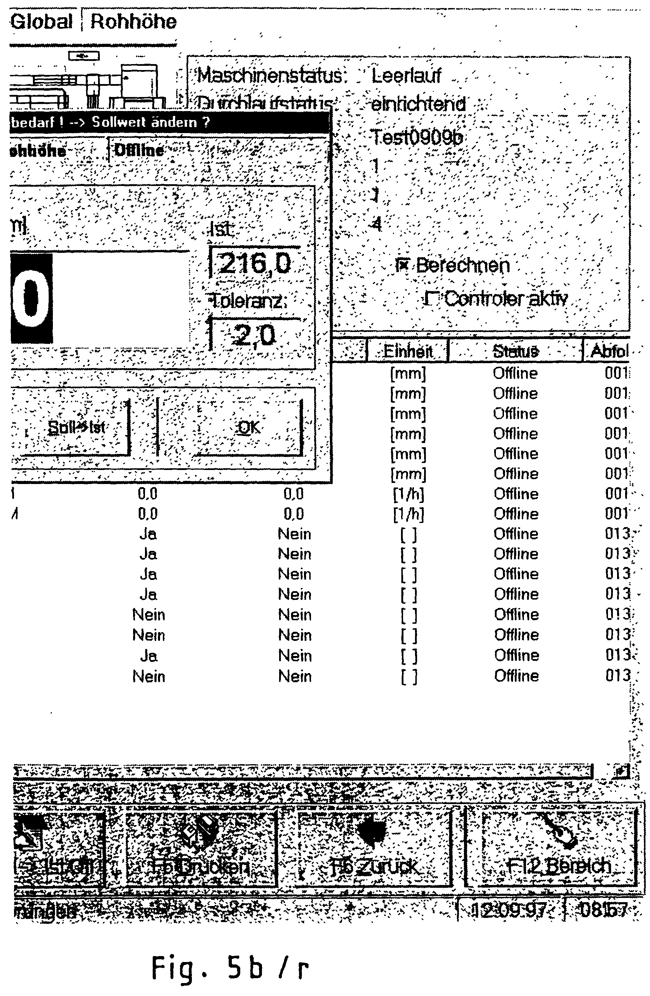

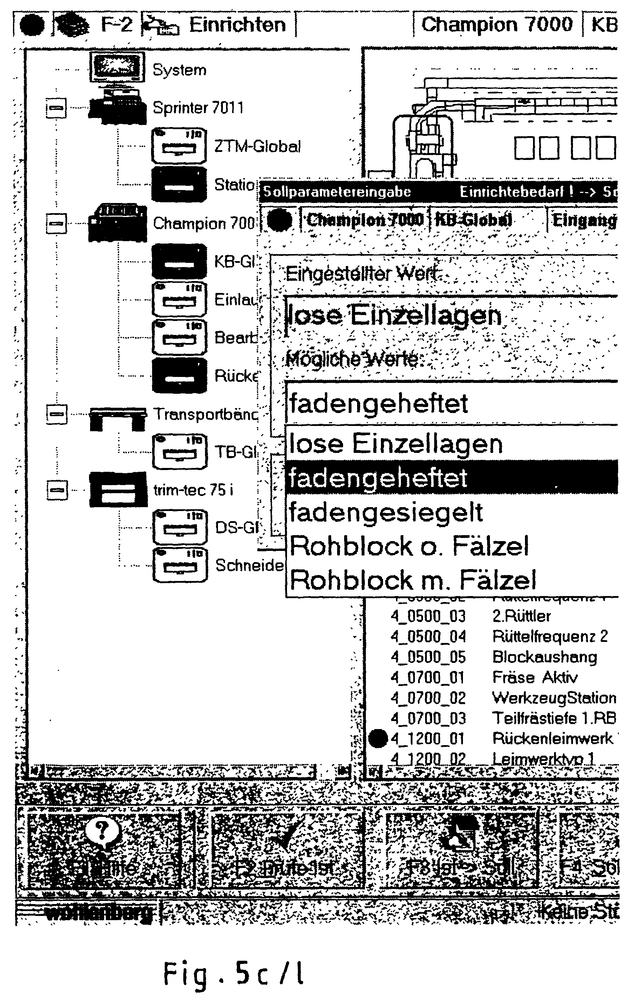

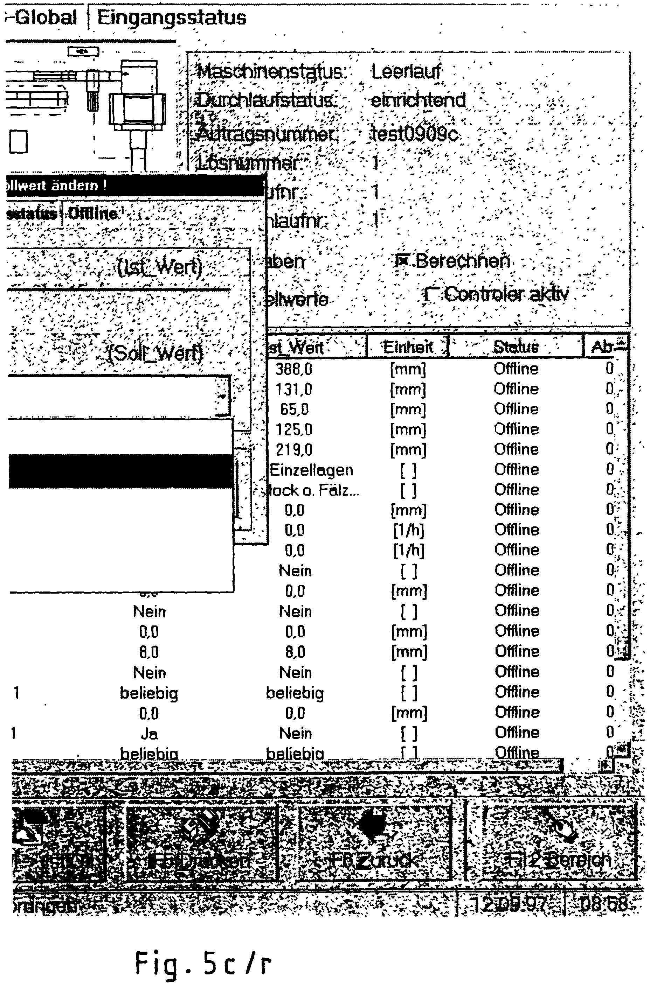

In Fig. 5b und 5c sind in die Maske nach 5a zusätzliche Fenster eingeblendet, die bei der Eingabe oder Änderung von Parametern geöffnet und bei Abbruch oder Bestätigung des Eingabewertes geschlossen werden. Das Beispiel nach Fig. 5b zeigt ein Eingabefeld für einen numerischen Wert mit Angabe der Grenzen, in denen der Wert verändert werden kann, sowie dem Ist-Wert und der Toleranz. Im Beispiel nach Fig. 5c besteht nur eine Auswahlmöglichkeit aus mehreren Angaben mit diskreten Werten mit Anzeige des Ist-Wertes.

Die Berechnungsvariablen sind von besonderer Bedeutung für die Bestimmung der Einstellgrößen. Sie dienen zur Feineinstellung des Fertigungsprozesses und sind somit maßgeblich für die spätere Qualität des Produktes.

Unter dem Begriff Maschineneinstellgrößen werden alle Größen zusammengefaßt, die der Bediener zum Einrichten der Anlage für eine einwandfreie Fertigung des Produktes benötigt. Dazu zählen diskrete Angaben, welche Anlagenkomponenten eingerichtet werden sollen und welche numerischen Werte an den einzelnen Stationen einzustellen sind.

Die im System ablaufenden Prozesse bei der Bestimmung der numerischen Einstellgrößen unterscheiden sich von denen bei der Ermittlung der diskreten Einstellgrößen.

Die diskreten Einstellgrößen können zum Teil direkt bei der Eingabe der vom Kunden vorgegebenen Produktdaten ermittelt werden. Beispiele hierfür sind die Aktivschaltung bestimmter Baugruppen, wie Gazestation "an", wenn das Produkt hinterklebt werden soll, und die Angabe des Materials, wie Hotmelt, Gaze und Fälzel. Einige diskrete Einstellgrößen, die nicht aus Produktdaten abgeleitet werden können, wie zum Beispiel die Aktivschaltung der Pressen, müssen durch den Bediener ohne eine konkrete Vorgabe eingegeben werden. Durch die vorgegebenen Daten des Referenzproduktes wird der Bediener unterstützt.

Die numerischen Einstellgrößen werden anhand von Algorithmen aus den numerischen Produktdaten und den Berechnungsvariablen berechnet. Der Algorithmus stellt im allgemeinen die Summe eines deterministischen, aus den Produktdaten ermittelten, geometrischen Grundwertes und einer heuristischen Berechnungsvariablen dar. So errechnet sich z. B. die Einstellgröße "Seitenpressung" aus einem geometrischen Grundwert, der sich aus der Blockdicke ergibt und vom Bediener bei der Eingabe der Vorgaben bestimmt wird. Der qualitätsbestimmende heuristische Aufschlag, mit dem die Stärke der seitlichen Pressung festgelegt wird, wird aus den Daten des Referenzproduktes übernommen.

Eine wichtige Funktion bei der Einrichtung spielen die Programm-Module zur Einrichteunterstützung Aktivator/Deaktivator, Controller und Parametersynchronisierer. Sobald der Bediener bei der Konfiguration des Produktes Baugruppen an bzw. ausschaltet, wird der Aktivator/Deaktivator aufgerufen, der die Berechnungsvariablen und Maschineneinstellgrößen der betreffenden Baugruppe ein bzw. ausblendet und im System die Notwendigkeit der Bestimmung hinterlegt. Wird beispielsweise die Gazestation eingeschaltet, so werden die vordere und hintere Anleimhöhe und weitere Parameter eingeblendet, und es werden vom Bediener diesbezügliche Angaben, wie Geometrie und Material gefordert. Wird die Gazestation deaktiviert, so werden den zugehörigen Maschineneinstellgrößen numerische und diskrete Werte zugewiesen, die gewährleisten, daß die Gazestation außer Eingriff ist. Diese Werte sind als sogenannte "Deaktive-Werte" im System gespeichert.

Der Controler erleichtert dem Bediener das Einrichten und Umrüsten dadurch, daß er Abhängigkeiten, die fest definiert sind, überprüft und gegebenenfalls selbständig korrigiert. Dies kann durch "Wenn" - "Dann" Abhängigkeiten erfolgen. Der Controler wird jedesmal aktiviert, wenn der Bediener einem Parameter, der in der Controlertabelle eingetragen ist, einen neuen Wert zuweist. Eine Controlerunterstützung in der Einstellung Maschineneinstellwerte mit Variablen kann realisiert werden, wenn beim Setzen von Variablen zurückgerechnet wird, welche Auswirkungen dies auf den Bearbeitungsprozeß hat.

Der Parametersynchronisierer sorgt dafür, daß nach dem Ändern eines oder mehrerer Parameter die Daten konsistent sind und als neuer Parametersatz verwendet und auch gespeichert werden darf. Es werden nur berechenbare oder rückrechenbare Parameter, die nicht deaktiviert sind, neu berechnet. Die deaktivierten Parameter behalten ihren deaktiven Wert. Beim Sychronisieren können die neu errechneten Werte auf ihren Gültigkeitsbereich überprüft werden. Hier ergibt sich eine Kollisionsüberprüfung, die für alle be- und zurückrechenbare Parameter eine Fehlerhilfe ausgeben kann. Kann beim Synchronisieren kein plausibler Datensatz erzeugt werden, muß dem Bediener die Möglichkeit gegeben werden, in die Ansicht Vorgaben zu wechseln. Die Vorgaben müssen alle im zulässigen Bereich sein. Der Parametersatz ist nach dem Berechnen synchronisiert und kann gespeichert werden. So kann auch eine automatische Fehlerkorrektur ablaufen, wenn der Bediener trotz Fehlerhilfe nicht in der Lage ist, einen kollisionsfreien Parametersatz einzustellen.

## Patentansprüche

1. Buchfertigungssystem, welches eine Buchfertigungsstraße mit mehreren Fertigungsmaschinen, Sensoren zur Überwachung von Maschinenparametern, Aktoren zur Einstellung von Maschinenparametern, Anzeigevorrichtungen zur Benutzerführung, Eingabevorrichtungen zur Steuerung und Bestätigung sowie Rechner umfaßt, mittels der programmgesteuert Auftragsdaten verarbeitet, Einrichtungsmaßnahmen durchgeführt und Maschinenprozesse überwacht werden, dadurch gekennzeichnet, daß die Rechner wenigstens einen als Server ausgebildeten Leitrechner umfassen, der über wenigstens ein Datenbus-System einerseits mit speicherprogammierbaren Steuerungen SPS, an die die Aktoren und/oder Sensoren angeschlossen sind, und andererseits mit als Clients ausgebildeten Arbeitsstationen verbunden ist, daß in Speichern, auf die der Leitrechner Zugriff hat, sowohl wenigstens eine Datenbank als auch wenigstens ein Programm gespeichert sind, daß zur Fertigung durch das Programm oder die Programme anhand der in der Datenbank oder den Datenbanken gespeicherten Daten Einstellparameter an die speicherprogammierbaren Steuerungen SPS übergeben werden und diese ihrerseits programmgesteuert die Einrichtung, die Ablaufsteuerung und/oder die Regelung der Maschinen mittels der Aktoren und Sensoren vornehmen und/oder einen Bedienerdialog mit Bedieneranweisungen auf den Anzeigevorrichtungen und Bedienereingaben über die Eingabevorrichtungen steuern und daß in der Datenbank Parametersätze von typischen Produkten oder Produktklassen gespeichert sind und aus den jeweiligen Auftragsdaten und den gespeicherten Parametersätzen sowie zusätzlichen Erfahrungs- und/oder Korrekturparametern individuelle Fertigungsparametersätze berechnet werden.

2. Buchfertigungssystem nach Anspruch 1, dadurch gekennzeichnet, daß die Erfahrungs- und/oder Korrekturparameter aus den Fertigungsparametersätzen und den Ist-Maßen bereits gefertigter Produkte und Produktklassen berechnet und/oder aktualisiert werden.

3. Buchfertigungssystem nach Anspruch 1 oder 2, dadurch gekennzeichnet, daß für Parametrierungsmaßnahmen die gespeicherten Daten eines ähnlichen Referenzproduktes aufrufbar sind, bei denen dann nur die abweichenden Parameter geändert werden.

4. Buchfertigungssystem nach einem der Ansprüche 1 bis 3, dadurch gekennzeichnet, daß eine Leitebene gebildet ist, in der die Arbeitsstationen mit dem Leitrechner vernetzt sind, daß eine Prozeßebene gebildet ist, in der die speicherprogammierbaren Steuerungen SPS mit dem Leitrechner vernetzt sind und daß das Netz der Leitebene vom Netz der Prozeßebene durch den Leitrechner getrennt ist.

5. Buchfertigungssystem nach Anspruch 4, dadurch gekennzeichnet, daß das Netz der Leitebene ein Lokal Area Netzwerk und das Netz der Prozeßebene ein Feldbussystem ist.

6. Buchfertigungssystem nach einem der Ansprüche 1 bis 5, dadurch gekennzeichnet, daß von den speicherprogammierbaren Steuerungen SPS Betriebsparameter an den Leitrechner rückübertragen werden.

7. Buchfertigungssystem nach einem der Ansprüche 1 bis 6, dadurch gekennzeichnet, daß die Datenbank oder die Datenbanken Produktdaten und/oder Berechnungsvariablen und/oder Maschineneinstellgrößen und/oder Auftragsdaten und/oder Kundendaten und/oder Materialstammdaten umfassen.

8. Buchfertigungssystem nach einem der Ansprüche 1 bis 7, dadurch gekennzeichnet, daß in der Datenbank oder den Datenbanken zusätzlich Stördaten und/oder Wartungs- und Instandhaltungskennwerte und/oder Qualitätsdaten und/oder Funktionsabläufe und -verknüpfungen für unterschiedliche Produktionsvarianten gespeichert sind.

9. Buchfertigungssystem nach einem der Ansprüche 1 bis 8, dadurch gekennzeichnet, daß das Programm oder die Programme mehrere Programm-Module umfassen und daß ein Daten- und Parameteraustausch zwischen diesen Programm-Modulen unmittelbar und/oder über einen gemeinsamen Programmkern und/oder über die Datenbank erfolgt.

10. Buchfertigungssystem nach einem der Ansprüche 1 bis 9, dadurch gekennzeichnet, daß Programm-Module zur Anlagenkonfiguration und/oder Stammdatenverwaltung und/oder Auftragsbearbeitung und/oder Prozeßkonfiguration und/oder Einrichten und/oder Anlagenüberwachung und/oder Auftragsüberwachung vorgesehen sind.

11. Buchfertigungssystem nach Anspruch 10, dadurch gekennzeichnet, daß die Programm-Module zur Parametrierung und zum Einrichten einen Aktivator/Deaktivator, einen Controler und einen Parametersatzsynchronisierer umfassen.

12. Buchfertigungssystem nach einem der Ansprüche 1 bis 11, dadurch gekennzeichnet, daß zusätzlich Programm-Module zur Ähnlichkeitssuche und/oder Qualitätsdatenerfassung und - auswertung und/oder Diagnose und/oder Wartung vorgesehen sind.

13. Buchfertigungssystem nach einem der Ansprüche 5 bis 12, dadurch gekennzeichnet, daß die Programm-Module visuelle Benutzerschnittstellen umfassen, durch die in mehreren Bildschirmbereichen gleichzeitig eine Darstellung der gesamten Anlage, eine schematische Darstellung einzelner Maschinenteile, kontextsensitiv dazu eine Parameterdarstellung der ausgewählten Maschinenteile und eine Statusanzeige der gesamten Anlage oder einzelner Maschinenteile erfolgt.

14. Buchfertigungssystem nach Anspruch 13, dadurch gekennzeichnet, daß die visuelle Benutzerschnittstelle gleichzeitig den Ablauf mehrerer Programm-Module vorsieht und einen Wechsel von einer zur anderen Bildschirmdarstellung direkt, d. h. auch ohne Durchlaufen der Menü-Baumstrukturen der Programm-Module umfaßt.
